# EUROPEAN PATENT APPLICATION

(11) **EP 4 474 128 A1**
(43) Date of publication of application: **11.12.2024**
(21) Application number: 22924983.4
(22) Date of filing: 09.12.2022
(51) Int. Cl.: B29C 45/16, B29C 49/06, B29C 49/22, B65D 65/40, B65D 1/00

(54) **MULTILAYERED CONTAINER, PRODUCTION METHOD FOR TWO-LAYERED PREFORM, AND PRODUCTION METHOD FOR MULTILAYERED CONTAINER**

(30) Priority: 03.02.2022 JP 2022015449
(71) Applicant: MITSUBISHI GAS CHEMICAL COMPANY, INC., Chiyoda-ku Tokyo 100-8324 (JP)
(72) Inventor: SHIMADA NAKAMURA, Jin, Hiratsuka-shi, Kanagawa 254-0016 (JP); ODA, Takafumi, Hiratsuka-shi, Kanagawa 254-0016 (JP)
(74) Representative: Vossius & Partner Patentanwälte Rechtsanwälte mbB
(86) International application number: PCT/JP2022/045482
(87) International publication number: WO 2023/149079

(57) **Abstract**

To provide a multilayer container including a two-color molding article e, a method for producing a two-layer preform, and a method for producing the multilayer container. The multilayer container including a two-color molding article, the two-color molding article including: an outer layer containing a polyester resin; and an inner layer containing a polyamide resin and being in contact with the outer layer, wherein the polyamide resin has a relative viscosity of 1.8 to 2.8.

## Description

### Technical Field

The present invention relates to a multilayer container, a method for producing a two-layer preform, and a method for producing the multilayer container.

### Background Art

Polyester resin containers such as PET bottles are used for various applications including beverage containers.

For example, Patent Document 1 describes that a polyester resin container is provided with a gas shielding layer, which prevents aldehydes in the polyester resin container from migrating into the container. More specifically, Patent Document 1 discloses a multilayer container having gas barrier properties, the multilayer container including a polyester resin inner surface layer to which an aldehyde reducing agent is added, a gas barrier resin intermediate layer, and a polyester resin outer surface layer. Furthermore, it describes that a metaxylylene group-containing polyamide resin is used in a gas barrier resin intermediate layer. Moreover, Patent Document 1 describes that a polyester resin layer and a polyamide resin layer are subjected to co-injection molding to form a preform, and the preform is blow-molded to form a bottle.

### Citation List

### Patent Documents

Patent Document 1: JP 2006-290436 A

### Summary of Invention

### Technical Problem

As described above, Patent Document 1 describes that a polyester resin layer and a polyamide resin layer are subjected to co-injection molding to form a preform, and the preform is blow-molded to produce a multilayer container.

Meanwhile, with technological innovation in recent years, there is a demand for molding the above-described multilayer container by two-color molding. However, it has been found that when a container that has an outer layer containing a polyester resin and an inner layer containing a polyamide resin, which is in contact with the outer layer, is molded by two-color molding, the transparency may be deteriorated.

An object of the present invention is to solve such problems and to provide a multilayer container including a two-color molding article excellent in transparency, a method for producing a two-layer preform, and a method for producing the multilayer container.

### Solution to Problem

As a result of the studies by the present inventors based on the object described above, they found that the above-described problems can be solved by adjusting a relative viscosity of a polyamide resin contained in an inner layer including the polyamide resin.

Specifically, the issues described above are solved by the following means.
<1> A multilayer container including a two-color molding article, the two-color molding article including:
   an outer layer containing a polyester resin; and
   an inner layer containing a polyamide resin, and being in contact with the outer layer,
   wherein the polyamide resin has a relative viscosity of 1.8 to 2.8.
<2> The multilayer container according to <1>,
   wherein the polyamide resin contains a xylylenediamine-based polyamide resin including a diamine-derived structural unit and a dicarboxylic acid-derived structural unit, 70 mol% or greater of the diamine-derived structural unit is derived from xylylenediamine, and 70 mol% or greater of the dicarboxylic acid-derived structural unit is derived from an α,ω-linear aliphatic dicarboxylic acid having from 4 to 20 carbon atoms.
<3> The multilayer container according to <1> or <2>, wherein a thickness ratio (outer layer : inner layer) between the outer layer and the inner layer is 6 : 4 to 9 : 1.
<4> A method for producing a two-layer preform, the method including:
   injecting a composition including a polyamide resin for forming an inner layer, between an outer layer preform including a polyester resin and a mold for forming an inner layer preform disposed inside the outer layer preform, to perform two-color molding of the outer layer preform and the inner layer preform,
   wherein a relative viscosity of the polyamide resin is 1.8 to 2.8.
<5> The method for producing a two-layer preform according to <4>,
   wherein the polyamide resin contains a xylylenediamine-based polyamide resin including a diamine-derived structural unit and a dicarboxylic acid-derived structural unit, 70 mol% or greater of the diamine-derived structural unit is derived from xylylenediamine, and 70 mol% or greater of the dicarboxylic acid-derived structural unit is derived from an α,ω-linear aliphatic dicarboxylic acid having from 4 to 20 carbon atoms.
<6> A method for producing a multilayer container, the method including:
   injecting a composition including a polyamide resin for forming an inner layer, between an outer layer preform including a polyester resin and a mold for forming an inner layer preform disposed inside the outer layer preform, to two-color molding the outer layer preform and the inner layer preform and to produce a two-layer preform; and
   blow-molding the two-layer preform,
   wherein a relative viscosity of the polyamide resin is from 1.8 to 2.8.
<7> The method for producing a multilayer container according to <6>,
   wherein the polyamide resin contains a xylylenediamine-based polyamide resin including a diamine-derived structural unit and a dicarboxylic acid-derived structural unit, 70 mol% or greater of the diamine-derived structural unit is derived from xylylenediamine, and 70 mol% or greater of the dicarboxylic acid-derived structural unit is derived from an α,ω-linear aliphatic dicarboxylic acid having from 4 to 20 carbon atoms.

### Advantageous Effects of Invention

According to the present invention, it is possible to provide a multilayer container including a two-color molding article excellent in transparency, a method for producing a two-layer preform, and a method for producing the multilayer container.

### Brief Description of Drawings

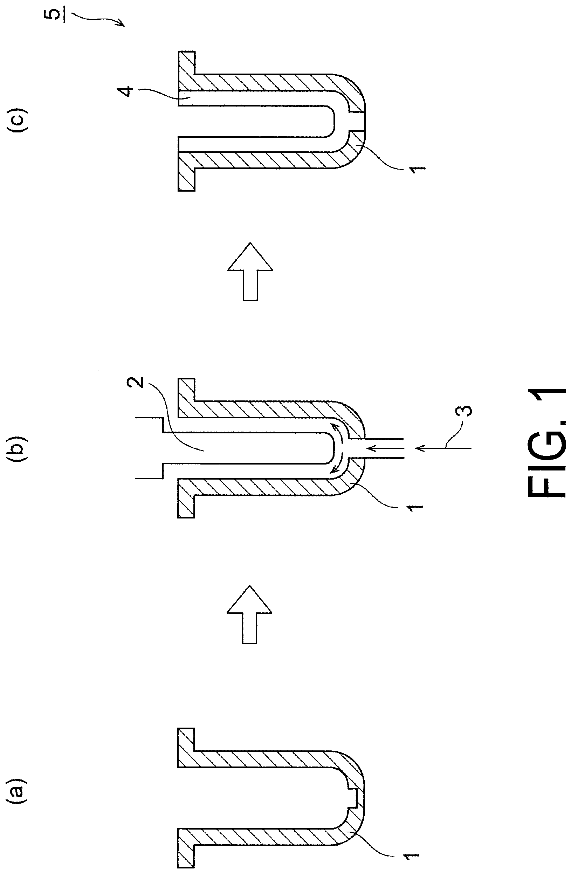

FIG. 1 is a cross-sectional schematic view illustrating an example of a method for producing a two-layer preform according to the present invention.

### Description of Embodiments

Embodiments for carrying out the present invention (hereinafter referred to simply as "the present embodiment") will next be described in detail. The present embodiment described below is an example for describing the present invention, and the present invention is not limited only to the present embodiment.

In the present specification, numerical values described before and after the term "to" are respectively the lower limit and the upper limit of a range including the numerical values.

In the present specification, various physical property values and characteristic values are those at 23°C unless otherwise noted.

In the present specification, the weight average molecular weight and the number average molecular weight can be measured according to the description in paragraph 0047 of JP 2018-165298 A, the contents of which are incorporated herein, unless otherwise specified.

In the present specification, the melting point can be measured according to the description in paragraph 0036 of WO 2016/084475, the contents of which are incorporated herein, unless otherwise specified. When a measurement method described in a standard set forth in the present specification differs depending on the year, it is based on the standard as of January 1, 2021 unless otherwise stated.

A multilayer container of the present embodiment includes a two-color molding article, the multilayer container including: an outer layer containing a polyester resin; and an inner layer containing a polyamide resin, and being in contact with the outer layer, wherein the polyamide resin has a relative viscosity of 1.8 to 2.8.

When a container in which an outer layer containing a polyester resin and an inner layer containing a polyamide resin are in contact with each other is molded by two-color molding, the produced multilayer container (two-layer container) may have poor transparency. It was presumed that this resulted from the production method of the two-color molding. This point is described below in accordance with FIG. 1. In FIG. 1, 1 denotes an outer layer preform, 2 denotes a mold for forming an inner layer preform, 3 denotes a composition for forming an inner layer, 4 denotes an inner layer preform, and 5 denotes a two-layer preform including the outer layer preform and the inner layer preform.

When a two-color molding article (two-color molding container) is molded by two-color molding a composition including a polyester resin for forming an outer layer and a composition including a polyamide resin for forming an inner layer, a composition including a polyester resin for forming an outer layer is injected into a mold first, to form an outer layer preform 1 containing a polyester resin. Then, a composition 3 for forming an inner layer is injected between the outer layer preform 1 and a mold 2 for forming an inner layer preform disposed inside the outer layer preform. At this time, the space between the outer layer preform 1 and the mold 2 for forming an inner layer preform is narrow. That is, the composition 3 for forming an inner layer is injected into a narrow region. Therefore, the composition 3 for forming an inner layer advances in a narrow flow path. As a result of studies conducted by the present inventors, it was presumed that a high viscosity of the polyamide resin in the composition 3 for forming an inner layer causes unevenness in the interface with the outer layer preform 1 when the composition 3 for forming an inner layer travels through this narrow flow path. Presumably, this unevenness is the cause of the increase in haze of the produced multilayer container. In the present embodiment, it is presumed that use of the polyamide resin contained in the composition 3 for forming an inner layer, which has a predetermined range of the relative viscosity, makes it possible to produce a two-layer preform 5 having an effectively decreased interface unevenness. As a result, it is presumed that the haze of the produced two-color molding article is reduced and the transparency of the produced multilayer container is improved.

The details of the present embodiment will be described below.

### <Multilayer Container>

A multilayer container of the present embodiment includes a two-color molding article, the two-color molding article including: an outer layer containing a polyester resin (hereinafter, may be referred to as "polyester resin layer"); and an inner layer containing a polyamide resin (hereinafter, may be referred to as "polyamide resin layer"), and being in contact with the outer layer.

In addition, the multilayer container of the present embodiment may include a two-color molding article (two-layer container) having one polyester resin layer and one polyamide resin layer, but may include another layer inside or outside the two-color molding container. Examples of the other layer(s) include an oxygen-absorbing layer, an adhesive layer, a gas barrier layer other than the polyamide resin layer, a protective layer, and a design layer. For details thereof, refer to the descriptions in paragraphs [0012] to [0046] of JP 2021-080025 A, the contents of which are incorporated herein. In the present embodiment, the other layer(s) is/are preferably layer(s) other than the polyester resin layer and the polyamide resin layer.

One example of the present embodiment is a two-layer container consisting of only a two-color molding article including a polyester resin layer and a polyamide resin layer, and another example is a multilayer container including the two-color molding article and other layers on the outside and/or the inside thereof.

In the multilayer container of the present embodiment, the polyester resin layer and the polyamide resin layer are in contact with each other in the thickness direction in the body section of the multilayer container, but it is not essential that the polyester resin layer and the polyamide resin layer are in contact with each other in all portions of the multilayer container. The opening of the multilayer container may have a non-contiguous portion. Usually, 80% or more of the inner surface area of the outer layer of the multilayer container is in contact with the inner layer (polyamide resin layer).

For example, when the multilayer container is a bottle, an aspect is exemplified in which the polyamide resin layer is included in the body section of a bottle, but the polyamide resin layer is not included in the vicinity of the opening (mouth plug section). However, the polyamide resin layer is preferably present up to near the opening of the bottle because such a configuration provides even higher barrier performance.

The multilayer container of the present embodiments is typically a hollow container, and the body section has a two-layer structure of the polyester resin layer and the polyamide resin layer. A ratio (thickness ratio W : S) of a thickness (W) of the polyester resin layer to a thickness (S) of the polyamide resin layer of the body section is preferably 6 : 4 to 9 : 1. The thickness of the layer means an average thickness. The thickness ratio (W : S) is more preferably 6 : 4 to 8 : 2, and further preferably 6.5 : 3.5 to 7.5 : 2.5. The thickness ratio being within such a range, an external volume retention rate at the time of moisture absorption tends to be further improved.

The total thickness of the polyester resin layer and the polyamide resin layer in the body section of the multilayer container is preferably 50 um or more, more preferably 100 µm or more, still more preferably 150 or more, further more preferably 200 um or more, even still more preferably 300 µm or more, yet even still more preferably 400 µm or more, and may be 500 µm or more. When the total thickness is equal to or more than the lower limit value, the drop impact resistance of the bottle tends to be further improved. In addition, the total thickness of the polyester resin layer and the polyamide resin layer in the body section of the multilayer container is preferably 5 mm or less, more preferably 3 mm or less, still more preferably 2 mm or less, may be 1 mm or less, and may be 700 µm or less. When the total thickness is equal to or lower than the upper limit, the weight of the bottle can be reduced.

The thickness (W) of the polyester resin layer in the body section of the multilayer container is preferably 50 um or more, more preferably 75 µm or more, and still more preferably 100 um or more. When the thickness is equal to or higher than the lower limit, the external volume retention rate at the time of moisture absorption tends to be further improved. The thickness (W) of the polyester resin layer is preferably 2 mm or less, more preferably 1 mm or less, and even more preferably 500 µm or less. When the multilayer container of the present embodiments has two or more polyester resin layers, the thickness of each polyester resin layer may the same or different.

The thickness (S) of the polyamide resin layer in the body section of the multilayer container is preferably 1 µm or more, more preferably 3 µm or more, and still more preferably 10 µm or more. When the content is the lower limit value or more, the gas barrier properties tend to be further improved. The thickness (S) of the polyamide resin layer is preferably 200 um or less, and more preferably 150 µm or less. When the thickness is equal to or lower than the upper limit, the external volume retention rate at the time of moisture absorption tends to be further improved.

The mass of the polyamide resin layer in the multilayer container (in particular, a bottle) of the present embodiment is preferably from 1 to 40 mass%, more preferably from 2 to 35 mass%, and particularly preferably from 3 to 30 mass%, relative to the total mass of the multilayer container. When the mass of the polyamide resin layer is within the above range, a multilayer container having good gas barrier properties can be produced.

The volume of the multilayer container is not particularly limited, but from the viewpoints of the oxygen barrier properties and producing, the volume of the multilayer container is preferably 30 mL or more, more preferably 50 mL or more, even more preferably 100 mL or more, still even more preferably 200 mL or more, and yet still even more preferably 250 mL or more, or the volume of the multilayer container is preferably 3000 mL or less, more preferably 2000 mL or less, even more preferably 1500 mL or less, still even more preferably 1000 mL or less, and yet still even more preferably 600 mL or less.

The multilayer container of the present embodiments is preferably excellent in oxygen barrier properties, as described above.

Specifically, an oxygen transmission rate of the multilayer container of the present embodiment is preferably 10.0 × 10⁻³ cc/(pkg · day) or less, more preferably 8.0 × 10⁻³ cc/(pkg · day) or less, still more preferably 7.0 × 10⁻³ cc/(pkg · day) or less, and yet still more preferably 6.5 × 10⁻³ cc / (pkg · day) or less. The oxygen transmission rate is achieved, for example, by using a polyamide resin having excellent oxygen barrier properties for the polyamide resin layer. The lower limit is ideally 0 cc/(pkg · day), but even the lower limit of 1.0 × 10⁻³ cc/(pkg · day) or more sufficiently satisfies the required performance. Such oxygen barrier properties can be achieved by use of a xylylenediamine-based polyamide resin. The oxygen transmission rate is measured according to the descriptions of Examples which will be given later.

The multilayer container of the present embodiments is preferably excellent in butyl acetate barrier properties. Specifically, the butyl acetate barrier properties of the multilayer container of the present embodiment are preferably 0.015 g / (bottle · day) or less, more preferably 0.011 g / (bottle · day) or less, and still more preferably 0.008 g / (bottle · day) or less. The lower limit is ideally 0, but even the lower limit of 0.0001 g / (bottle • day) or more sufficiently satisfies the required performance. The butyl acetate barrier properties are achieved by use of a resin excellent in barrier properties such as a xylylenediamine-based polyamide resin.

The multilayer container (body section) of the present embodiment preferably has a low haze. Specifically, the haze is preferably 5.0% or less, more preferably 4.5% or less, still more preferably 4.0% or less, and even still more preferably 3.5% or less. The lower limit of the total light transmittance is ideally 0%, but the required performance is satisfied even when the lower limit of the total light transmittance is, for example, 0.1% or greater, or further 0.5% or greater. The haze is measured according to a description in Examples below. Such a low haze is achieved by molding the polyester resin layer and the polyamide resin layer by two-color molding.

Next, the details of the outer layer (polyester resin layer) including a polyester resin in the present embodiments will be described.

The polyester resin contained in the polyester resin layer is preferably a polycondensation polymer of a dicarboxylic acid and a diol, and preferably includes a structural unit derived from a dicarboxylic acid (hereinafter, also referred to as a "dicarboxylic acid unit") and a structural unit derived from a diol (hereinafter, also referred to as a "diol unit").

Examples of dicarboxylic acid units include structural units derived from aromatic dicarboxylic acids, structural units derived from alicyclic dicarboxylic acids, and structural units derived from aliphatic dicarboxylic acids, and structural units derived from aromatic dicarboxylic acids are preferred.

Examples of aromatic dicarboxylic acids include terephthalic acid, isophthalic acid, orthophthalic acid, biphenyl dicarboxylic acid, diphenyl ether dicarboxylic acid, diphenylsulfone dicarboxylic acid, diphenylketone dicarboxylic acid, 2,6-naphthalene dicarboxylic acid, 1,4-naphthalene dicarboxylic acid, and 2,7-naphthalene dicarboxylic acid. From perspectives of cost and production ease, terephthalic acid, isophthalic acid, orthophthalic acid, naphthalene dicarboxylic acid, and 4,4'-biphenyl dicarboxylic acid are preferable, and terephthalic acid, isophthalic acid, and naphthalene dicarboxylic acid are more preferable, and from the perspective of moldability, terephthalic acid and isophthalic acid are further preferable, and terephthalic acid is even more preferable.

Note that as the aromatic dicarboxylic acid, an alkyl ester of an aromatic dicarboxylic acid having 1 to 4 carbons may be used.

As the aromatic dicarboxylic acid, a sulfophthalic acid and a metal sulfophthalate may be used. For the details of sulfophthalic acid and metal sulfophthalates, reference can be made to the contents of paragraph [0018] of WO 2017/057463, the contents of which are incorporated herein by reference.

Examples of the alicyclic dicarboxylic acid include cyclohexane dicarboxylic acid, norbornene dicarboxylic acid, and tricyclodecane dicarboxylic acid.

Examples of the aliphatic dicarboxylic acid include malonic acid, succinic acid, adipic acid, azelaic acid, and sebacic acid.

Examples of the diol unit include structural units derived from aliphatic diols, structural units derived from alicyclic diols, and structural units derived from aromatic diols, and structural units derived from aliphatic diols are preferable.

Examples of the aliphatic diols include ethylene glycol, 2-butene-1,4-diol, trimethylene glycol, tetramethylene glycol, hexamethylene glycol, neopentyl glycol, methylpentanediol, and diethylene glycol. Among these, ethylene glycol is preferable, and ethylene glycol is more preferable.

Examples of the alicyclic diols include cyclohexane dimethanol, isosorbide, spiroglycol, 2,2,4,4-tetramethyl-1,3-cyclobutanediol, norbornene dimethanol and tricyclodecane dimethanol.

Examples of aromatic diols include bisphenol compounds and hydroquinone compounds.

Regarding the polyester resin used in the present embodiments, it is preferable that 50 mol% or greater of a structural unit derived from dicarboxylic acid (dicarboxylic acid unit) be a structural unit derived from an aromatic dicarboxylic acid and 50 mol% or greater of a structural unit derived from diol (diol unit) be derived from aliphatic diol, it is more preferable that 50 mol% or greater of the dicarboxylic acid unit be a structural unit derived from terephthalic acid and 50 mol% or greater of the diol unit be a structural unit derived from ethylene glycol, it is still more preferable that 80 mol% or greater of the dicarboxylic acid unit be a structural unit derived from terephthalic acid and 80 mol% or greater of the diol unit is a structural unit derived from ethylene glycol, and it is still even more preferable that 90 mol% or greater of the dicarboxylic acid unit be a structural unit derived from terephthalic acid and 90 mol% or greater of the diol unit is a structural unit derived from ethylene glycol.

Note that in the following description, a polyester resin in which 50 mol% or greater of the dicarboxylic acid unit is a structural unit derived from terephthalic acid, and 50 mol% or greater of the diol unit is a structural unit derived from ethylene glycol is also referred to as polyethylene terephthalate.

When the polyester resin uses polyethylene terephthalate, the polyester resin may be constituted of polyethylene terephthalate alone, or may contain a polyester resin other than polyethylene terephthalate in addition to the polyethylene terephthalate. The polyethylene terephthalate is preferably contained at an amount of from 80 to 100 mass%, and more preferably from 90 to 100 mass%, relative to the total amount of the polyester resin.

Preferred aspects where the polyester resin is polyethylene terephthalate are described below. The polyethylene terephthalate may be one containing a structural unit derived from a bifunctional compound other than terephthalic acid and ethylene glycol, and examples of the bifunctional compound include the aforementioned aromatic dicarboxylic acids and aliphatic diols other than terephthalic acid and ethylene glycol, as well as bifunctional compounds other than aromatic dicarboxylic acids and aliphatic diols. Here, the structural unit derived from the bifunctional compound other than terephthalic acid and ethylene glycol accounts for preferably 20 mol% or less, and more preferably 10 mol% or less relative to the total moles of all structural units constituting the polyester resin.

Note that, even in the case where the polyester resin is a polyester resin other than polyethylene terephthalate, the polyester resin may be one containing a structural unit derived from a bifunctional compound other than aromatic dicarboxylic acids and aliphatic diols. For the details of the bifunctional compound other than aliphatic diols and aromatic dicarboxylic acids, reference can be made to the descriptions in paragraphs [0022] and [0023] of WO 2017/057463, the contents of which are incorporated herein by reference.

The polyester resin may include structural unit derived from a monofunctional compound such as a monocarboxylic acid and a monoalcohol. For these details, reference can be made to the descriptions in paragraph [0024] of WO 2017/057463, the contents of which are incorporated herein by reference.

Furthermore, in order to obtain necessary physical properties, the polyester resin may contain, as a copolymerization component, a polyfunctional compound having at least three groups selected from carboxyl groups, hydroxy groups, and ester-forming groups thereof. For these details, reference can be made to the descriptions in paragraph [0025] of WO 2017/057463, the contents of which are incorporated herein by reference.

As for the method of producing polyester resin, reference can be made to the descriptions in paragraph [0026] of WO 2017/057463, the contents of which are incorporated herein by reference.

The intrinsic viscosity of the polyester resin is not particularly limited, but is preferably from 0.5 to 2.0 dL/gm and more preferably from 0.6 to 1.5 dL/g. The molecular weight of the polyester resin is sufficiently high when the intrinsic viscosity is greater than or equal to 0.5 dL/g, and therefore the multilayer container can more effectively exhibit the mechanical properties necessary as a structure.

Note that the intrinsic viscosity is measured by dissolving the polyester resin in a mixed solvent of phenol/1,1,2,2-tetrachloroethane (= 6/4 mass ratio) to prepare 0.2, 0.4, and 0.6 g/dL solutions, and then measuring the intrinsic viscosity at 25°C using an automatic viscosity measuring apparatus (Viscotek, available from Malvern Instruments Limited).

The content of the polyester resin (preferably polyethylene terephthalate) in the polyester resin layer is preferably 90 mass% or greater of the polyester resin layer, more preferably 95 mass% or greater, and still more preferably 98 mass% or greater. The content may be 99 mass% or greater. The upper limit of the content may be 100 mass%.

The polyester resin layer in the present embodiments may contain one type only or two or more types of the polyester resins. When two or more types of polyamide resins are contained, the total amount thereof preferably falls within the above range.

The polyester resin layer may contain a component other than the polyester resin. Examples of the other components include resins other than the polyester resin, thermal stabilizers, photostabilizers, moisture-proof agents, waterproofing agents, lubricants, spreading agents, pigments, and dyes.

The polyester resin layer may include one type of the above components, or may include two or more types of the above components. These components are preferably blended at a ratio of 10 parts by mass or less to 100 parts by mass of the polyester resin.

Next, the details of the inner layer (polyamide resin layer) including a polyamide resin in the present embodiments will be described.

The polyamide resin used in the present embodiment has a relative viscosity of 1.8 to 2.8. When the relative viscosity is equal to or higher than the lower limit, the mechanical properties tend to be further improved. In addition, when the relative viscosity is equal to or less than the upper limit, it is possible to effectively suppress surface unevenness with the polyester resin layer at the time of two-color molding and to increase the transparency of the produced multilayer container.

The relative viscosity of the polyamide resin is preferably 1.9 or more, more preferably 2.0 or more, and still more preferably 2.1 or more. Moreover, the relative viscosity of the polyamide resin is preferably 2.7 or less, more preferably 2.6 or less, still more preferably 2.5 or less, even more preferably 2.4 or less, further more preferably 2.3 or less, and yet even more preferably 2.2 or less. The relative viscosity of the polyamide resin can be adjusted by the molar ratio of the diamine to the dicarboxylic acid and the polymerization conditions during the synthesis of the polyamide resin.

In the present embodiment, the relative viscosity of the polyamide resin is a ratio of a dropping time (t) to a dropping time (t0) and is represented by the following formula. Here, the dropping time (t) is determined by dissolving a polyamide resin (0.2 g) in 96% sulfuric acid (20 mL) and measuring it at 25°C by a Cannon-Fenske viscometer, and the dropping time (t) is determined by measuring 96% sulfuric acid itself in the same manner.

### Relative Viscosity = t/t0

When the polyamide resin layer according to the present embodiment includes two or more types of polyamide resins, the relative viscosity of the mixture is used.

The polyamide resin used in the present embodiments may be an aliphatic polyamide resin or a semi-aromatic polyamide resin, or may be a mixture of an aliphatic polyamide resin and a semi-aromatic polyamide resin, and preferably includes at least a semi-aromatic polyamide resin. For the polyamide resin, reference can be made to the disclosures in paragraphs [0011] to [0013] of JP 2011-132550 A, the contents of which are incorporated herein by reference.

Examples of the aliphatic polyamide resin include polyamide 6 and polyamide 66, and polyamide 66 is preferable.

The polyamide resin used in the present embodiments preferably includes a semi-aromatic polyamide resin. For example, 80 mass% or greater (preferably 85 mass% or greater, more preferably 90 mass% or greater, and still more preferably 95 mass% or greater) of the polyamide resin contained in the resin composition of the present embodiments is preferably a semi-aromatic polyamide resin. Here, the semi-aromatic polyamide resin refers to a polyamide resin including a diamine-derived structural unit and a dicarboxylic acid-derived structural unit, in which from 20 to 80 mol% of the total structural unit of the diamine-derived structural unit and the dicarboxylic acid-derived structural unit is a structural unit containing an aromatic ring. By using such a semi-aromatic polyamide resin, the mechanical strength of the resulting multilayer container can be increased. Examples of the semi-aromatic polyamide resin include terephthalic acid-based polyamide resins (polyamide 6T, polyamide 9T, polyamide 10T), terephthalic acid and isophthalic acid-based polyamide resins (polyamide 6T/6I, polyamide 9T/9I, polyamide 10T/10I), and xylylenediamine-based polyamide resins that will be described later. The xylylenediamine-based polyamide resins are preferable.

In the present embodiment, it is preferable to include a xylylenediamine-based polyamide resin including a diamine-derived structural unit and a dicarboxylic acid-derived structural unit, 70 mol% or greater of the diamine-derived structural unit being derived from xylylenediamine, and 70 mol% or greater of the dicarboxylic acid-derived structural unit being derived from an α,ω-linear aliphatic dicarboxylic acid having from 4 to 20 carbon atoms. Use of the xylylenediamine-based polyamide resin can impart excellent gas barrier properties to a multilayer container.

In the xylylenediamine-based polyamide resin, more preferably 75 mol% or greater, still more preferably 80 mol% or greater, even more preferably 85 mol% or greater, even still more preferably 90 mol% or greater, yet even still more preferably 95 mol% or greater, and particularly even still more preferably 97 mol% or greater of the diamine-derived structural unit is derived from m-xylylenediamine and p-xylylenediamine.

In the present embodiments, a ratio between m-xylylenediamine and p-xylylenediamine is preferably 0 to 90 mol% of p-xylylenediamine relative to 10 to 100 mol% of m-xylylenediamine, more preferably 0 to 70 mol% of p-xylylenediamine relative to 30 to 100 mol% of m-xylylenediamine, still more preferably 0 to 30 mol% of p-xylylenediamine relative to 70 to 100 mol% of m-xylylenediamine, even still more preferably 0 to 10 mol% of p-xylylenediamine relative to 90 to 100 mol% of m-xylylenediamine, and yet even still more preferably 0 to 2 mol% of p-xylylenediamine relative to 98 to 100 mol% of m-xylylenediamine. When the value is set to the above range, the oxygen barrier properties tend to be further improved.

Examples of the diamine that can be used as a raw material diamine component of the xylylenediamine-based polyamide resin, other than m-xylylenediamine and p-xylylenediamine, include aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, and 2,4,4-trimethylhexamethylenediamine; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl)ether, p-phenylenediamine, and bis(aminomethyl)naphthalene. One of these can be used alone, or two or more can be mixed and used.

More preferably 75 mol% or greater, still more preferably 80 mol% or greater, even more preferably 90 mol% or greater, even still more preferably 95 mol% or greater, yet even still more preferably 98 mol% or greater, and particularly still more preferably 99.9 mol% or greater of the dicarboxylic acid-derived structural unit of the xylylenediamine-based polyamide resin is derived from an α,ω-linear aliphatic dicarboxylic acid having from 4 to 20 carbon atoms.

Examples of the α,ω-linear aliphatic dicarboxylic acid having from 4 to 20 carbon atoms that is preferably used as the raw material dicarboxylic acid component of the xylylenediamine-based polyamide resin include aliphatic dicarboxylic acids, such as succinic acid, glutaric acid, pimelic acid, suberic acid, azelaic acid, adipic acid, sebacic acid, undecanedioic acid, and dodecanedioic acid. Among these, one type, or a mixture of two or more types may be used, but adipic acid and/or sebacic acid is more preferable, and adipic acid is more preferable because a melting point of the polyamide resin is in an appropriate range for molding.

Examples of the dicarboxylic acid component other than the α,ω-linear aliphatic dicarboxylic acid having from 4 to 20 carbon atoms include phthalic acid compounds, such as isophthalic acid, terephthalic acid, and orthophthalic acid; and naphthalenedicarboxylic acid isomers, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One type, or a mixture of two or more types may be used. In particular, isophthalic acid is exemplified as the dicarboxylic acid component other than the α,ω-linear aliphatic dicarboxylic acid having 4 to 20 carbon atoms.

In the present embodiment, 70 mol% or greater (more preferably 75 mol% or greater, still more preferably 80 mol% or greater, even still more preferably 90 mol% or greater, yet even still more preferably 95 mol% or greater, and yet even still more preferably 98 mol% or greater) of the diamine-derived structural unit of the xylylenediamine-based polyamide resin is derived from m-xylylenediamine, and 70 mol% or greater (more preferably 75 mol% or greater, still more preferably 80 mol% or greater, even still more preferably 90 mol% or greater, yet even still more preferably 95 mol% or greater, and yet even still more preferably 98 mol% or greater) of the dicarboxylic acid-derived structural unit is particularly derived from adipic acid and/or sebacic acid (preferably adipic acid).

The xylylenediamine-based polyamide resin may be modified with isophthalic acid. For example, the case where 1 to 10 mol% of the structural unit derived from dicarboxylic acid is a structural unit derived from isophthalic acid is exemplified.

The xylylenediamine-based polyamide resin used in the present embodiments mainly includes a diamine-derived structural unit and a dicarboxylic acid-derived structural unit, but structural units other than these are not entirely excluded. Of course, the xylylenediamine-based polyamide resin may contain a structural unit derived from a lactam such as ε-caprolactam or laurolactam, or from an aliphatic aminocarboxylic acid such as aminocaproic acid or aminoundecanoic acid. As used herein, the term "main components" indicates that, of the structural units constituting the xylylenediamine-based polyamide resin, the total number of the diamine-derived structural units and the dicarboxylic acid-derived structural units is the largest among all the structural units. In the present embodiments, the total of the diamine-derived structural units and the dicarboxylic acid-derived structural units in the xylylenediamine-based polyamide resin preferably accounts for 90 mass% or greater, more preferably 95 mass% or greater, and may account for 98 mass% or greater, of all the structural units.

As a method for producing the xylylenediamine-based polyamide resin, a known method can be employed. For example, reference can be made to the descriptions in paragraph [0041] to [0043] of WO 2017/057463, the contents of which are incorporated herein by reference.

The number average molecular weight of the polyamide resin (preferably xylylenediamine-based polyamide resin) used in the present embodiments is selected, as appropriate, according to the application and molding method of the multilayer container, but from the perspectives of moldability and strength of the multilayer container, the number average molecular weight is preferably from 10000 to 60000, and more preferably from 11000 to 50000.

The content of the polyamide resin (preferably xylylenediamine-based polyamide resin) contained in the polyamide resin layer in the present embodiment is preferably 30 mass% or greater, more preferably 50 mass% or greater, even more preferably 70 mass% or greater, still even more preferably 90 mass% or greater, yet still even more preferably 95 mass% or greater, yet still even more preferably 98 mass% or greater, and may be 99 mass% or greater, based on the polyamide resin layer. When the content is equal to or higher than the lower limit, the barrier properties tend to be further improved. The upper limit of the content of the polyamide resin is not particularly limited, but is, for example, 99.9 mass% or less.

In the present embodiments, the polyamide resin layer may contain a component other than the above components. Examples of the other components include resins other than the polyamide resin, pro-oxidants, yellowing-preventing agents, oxygen absorbers, thermal stabilizers, photostabilizers, moisture-proof agents, waterproofing agents, lubricants (e.g., calcium stearate), and spreading agents. For pro-oxidants and yellowing-preventing agents, reference can be made to the descriptions in paragraph [0061] to [0070] of WO 2021/177126, the contents of which are incorporated herein by reference.

The polyamide resin layer may include one type of the above components, or may include two or more types of the above components. These components are preferably blended at a ratio of 10 parts by mass or less to 100 parts by mass of the polyamide resin.

Next, the usage of the multilayer container of this embodiment will be explained.

The shape of the multilayer container of the present embodiment is not particularly limited, examples thereof include molded containers such as bottles and cups, and bottles are preferred.

The content to be stored in the multilayer container of the present embodiment is not particularly limited. Examples include food products, cosmetics, pharmaceuticals, toiletries, mechanical, electrical and electronic components, oils, and resins.

Examples of the food products include processed fishery products, processed livestock products, rice, and liquid foods. The multilayer container of the present invention is particularly suitable for storing foods that are easily affected by oxygen. For details thereof, refer to the descriptions in paragraphs [0032] to [0035] of JP 2011-037199 A, the contents of which are incorporated herein. Specific examples of the food products include beverages such as vegetable juice, fruit juice, teas, coffee and coffee beverages, milk and milk beverages, mineral water, ionic beverages, alcoholic beverages, fermented milk beverages, and soy milk; gel foods such as tofu, egg tofus, jellies, puddings, soft adzuki-bean jelly, mousse, yogurts, an apricot bean curd; seasonings such as sauces, soy sauce, ketchup, noodle soup bases, Japanese sauces, vinegar, mirin, dressings, jams, mayonnaise, miso, pickles, and grated spices; processed meat products such as salami, ham, sausage, yakitori, meatballs, hamburger, grilled pork, and beef jerky; processed fishery products such as kamaboko, shellfish, boiled fish, and tube-shaped fish paste cakes; processed rice products such as rice gruel, cooked rice, rice casserole, and red rice; sauces such as meat sauce, mabo sauce, pasta sauce, curry, stews, and hash sauce; dairy products such as cheese, butter, cream, and condensed milk; processed egg products such as boiled eggs and soft boiled eggs; boiled vegetables and boiled beans; side dishes such as fried foods, steamed foods, stir fry, boiled foods, and baked foods; Japanese pickled vegetables; noodles and pastas such as udon, soba, and spaghetti; and fruit preserved in syrups.

Depending on the target content to be stored, the multilayer container may be disinfected or sterilized using ultraviolet rays, electron beams, gamma rays, X-rays, and the like.

### <Method for producing two-layer preform>

A method for producing a two-layer preform of the present embodiment includes: injecting a composition including a polyamide resin for forming an inner layer, between an outer layer preform including a polyester resin and a mold for forming an inner layer preform disposed inside the outer layer preform, to perform two-color molding of the outer layer preform and the inner layer preform,
wherein a relative viscosity of the polyamide resin is 1.8 to 2.8. In such two-color molding, use of a polyamide resin having a predetermined relative viscosity of the polyamide makes it possible to effectively suppress the interface unevenness between the outer layer and the inner layer, and to improve the transparency of the produced two-layer preform and the multilayer container.

The method for producing a two-layer preform of this embodiment will be described in further detail with reference to FIG. 1.

In the embodiment shown in FIG. 1, an outer layer preform 1 containing a polyester resin is used (FIG. 1 (a)). A composition including a polyester resin for forming an outer layer is a portion that finally becomes the outer layer of a two-color molding article (two-color molding container). However, as described above, the multilayer container may be composed of only two layers of an inner layer and an outer layer, but may have other layer(s), and the outer layer may not be the outermost layer of the multilayer container. The polyester resin contained in the composition for forming the outer layer is the same as the polyester resin described in the section of the multilayer container. In addition, the composition for forming the outer layer that includes polyester resin may contain a component besides the polyester resin, and details thereof are also the same as the other components described in the section of the outer layer. In addition, the mass ratio of each constituent component and the mass ratio of the polyester resin contained in the composition for forming the outer layer are also the same as the contents described in the section of the outer layer.

The outer layer preform 1 is usually formed by injecting a composition including a polyester resin for forming an outer layer into a mold for forming an outer layer (not shown). The injection temperature of the composition for forming an outer layer (temperature of injection cylinder at the outer layer side) is preferably the injection temperature of the composition for forming an inner layer (temperature of injection cylinder at the inner layer side) + (5 to 40)°C, more preferably the temperature of injection cylinder at the inner layer side + (5 to 30)°C, and even more preferably the temperature of injection cylinder at the inner layer side + (10 to 20)°C. Since the two-layer preform of the present embodiment is molded by two-color molding, it is molded in the same injection molding machine. Usually, while the outer layer preform 1 is not completely cooled and solidified, and the inner layer preform is formed inside thereof.

More specifically, in the embodiment shown in FIG. 1, a mold 2 for forming an inner layer preform is disposed inside the outer layer preform 1 in a two-color molding apparatus (FIG. 1 (b)). Then, a composition 3 for forming an inner layer is injected between the outer layer preform 1 and the mold 2 for forming an inner layer preform. A composition including a polyamide resin for forming an inner layer is a portion that finally becomes the inner layer of a two-color molding article (two-color molding container). However, as described above, the multilayer container may consist of only two layers of an inner layer and an outer layer, but may have other layer(s), and the inner layer may not be the innermost layer of the multilayer container. The polyamide resin contained in the composition for forming the inner layer is the same as the polyamide resin described in the section of the multilayer container. In addition, the composition for forming the inner layer that includes polyamide resin may contain a component besides the polyamide resin, and details thereof are also the same as the other components described in the section of the inner layer. In addition, the mass ratio of each constituent component and the mass ratio of the polyamide resin contained in the composition for forming the inner layer are also the same as the contents described in the section of the inner layer.

In the state of the two-layer preform, the average thickness of the portions (two layers) to be the body section of the multilayer container is usually about 2.0 to 7.0 mm, further about 2.5 to 6.0 mm, and particularly about 2.5 to 5.5 mm.

In the present embodiment, the thickness ratio between the outer layer and the inner layer is particularly preferably 6.5 : 3.5 to 7.5 : 2.5. When the thickness ratio is in such a range, the flow path of the composition for forming an inner layer is more sufficiently secured, and a two-layer preform having more excellent transparency is produced.

In the present embodiment, the composition 3 for forming an inner layer is injected between the outer layer preform 1 and the mold 2 for forming an inner layer preform. A portion between the outer layer preform 1 and the mold 2 for forming an inner layer preform corresponding to a flow path of the composition 3 for forming an inner layer is a portion serving as an inner layer.

The composition 3 for forming an inner layer is preferably injected from a position below the outer layer preform 1 (usually on the side opposite to the opening of the multilayer container). At this time, the composition 3 for forming an inner layer is in a molten state.

The injection temperature of the composition for forming an inner layer (temperature of injection cylinder at the inner layer side) is preferably the melting point of the polyamide resin contained in the composition 3 for forming an inner layer + (15 to 50)°C, and more preferably the melting point of the polyamide resin + (20 to 40)°C. When the value is in the above range, the coloring of the polyamide resin can tend to be more effectively suppressed.

When the composition 3 for forming an inner layer is injected and molded, the temperature of the outer layer preform is preferably the temperature of the composition 3 for forming an inner layer - (60 to 200)°C, and more preferably the temperature of the composition 3 for forming an inner layer - (110 to 180)°C. Within the above range, preheating before blow-molding can be shortened.

In the thus-produced two-layer preform, the unevenness of the interface between the inner layer preform 4 and the outer layer preform 1 is reduced and the two-layer preform has excellent transparency.

In the above two-layer preform, as a thickness of the outer layer preform, an average thickness of a portion to be a body section of the multilayer container is preferably 1.5 mm or more, more preferably 2.0 mm or more, and may be 2.8 mm or more, and preferably 6.0 mm or less, and more preferably 5.0 mm or less.

In the above two-layer preform, as a thickness of the inner layer preform, an average thickness of a portion to be a body section of the multilayer container is preferably 0.7 mm or more and more preferably 1.0 mm or more, and preferably 3.0 mm or less and more preferably 2.0 mm or less.

Next, a method for producing a multilayer container of the present embodiment will be described.

A method for producing a multilayer container of the present embodiment includes: injecting a composition including a polyamide resin for forming an inner layer, between an outer layer preform including a polyester resin and a mold for forming an inner layer preform disposed inside the outer layer preform, to perform two-color molding of the outer layer preform and the inner layer preform and to produce a two-layer preform; and blow-molding the two-layer preform, wherein a relative viscosity of the polyamide resin is from 1.8 to 2.8.

In such two-color molding, use of a polyamide resin having a predetermined relative viscosity of the polyamide makes it possible to effectively reduce the interface unevenness between the outer layer and the inner layer, and to improve the transparency of the produced multilayer container.

The steps and materials to produce the two-layer preform are the same as those in the production method of the above-described two-layer preform.

A known technique can be employed for blow-molding the two-layer preform. For example, the blow-molding is preferably performed by biaxial stretch blow-molding. When the two-layer preform is formed by the biaxial stretch blow-molding, the preform is preferably heated so that the preform heating temperature is preferably the injection temperature of the composition 3 for forming an inner layer (temperature of injection cylinder at the inner layer side) + (1 to 50°C) (preferably temperature of injection cylinder at the inner layer side + (4 to 40°C) and more preferably temperature of injection cylinder at the inner layer side + (10 to 30°C)). The two-layer preform is preferably heated so that it is preferably 90 to 120°C, and more preferably 95 to 115°C. In the biaxial stretch blow-molding, the primary blow pressure is preferably 0.5 to 2.0 MPa, more preferably 0.5 to 1.2 MPa, and the secondary blow pressure is preferably 1.0 to 5.0 MPa, and more preferably 1.5 to 4.5 MPa. As a result, the occurrence of thickness unevenness and stretching unevenness is suppressed, and a multilayer container having excellent strength can be produced.

### Examples

The present invention will next be described in more detail with reference to Examples. Materials, amounts used, proportions, processing details, and processing procedures described in the following Examples can be appropriately changed without departing from the spirit of the present invention. Thus, the scope of the present invention is not limited to the specific examples described below.

When a measuring device used in the Examples is not readily available due to, for example, discontinuation, another device with equivalent performance can be used for measurement.

### 1. Raw Material

PET: Thermoplastic polyester resin synthesized from terephthalic acid and ethylene glycol, Unipet BK2180, available from Mitsubishi Chemical Corporation.

### <Synthesis of MXD6 (relative viscosity 2.6)>

In a jacketed reactor equipped with an agitator, a partial condenser, a cooler, a thermometer, a dripping tank, and a nitrogen gas introduction tube, adipic acid was placed, inside of the reactor was sufficiently purged with nitrogen, and the adipic acid was heated and melted at 170°C. Then, while the contents were agitated and while m-xylylenediamine (MXDA, available from Mitsubishi Gas Chemical Company, Inc.) was gradually added dropwise in a manner that the molar ratio relative to adipic acid became 0.996 (diamine / dicarboxylic acid), the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain MXD6 (relative viscosity 2.6).

### <Synthesis of MXD6 (relative viscosity 2.4)>

In a jacketed reactor equipped with an agitator, a partial condenser, a cooler, a thermometer, a dripping tank, and a nitrogen gas introduction tube, adipic acid was placed, inside of the reactor was sufficiently purged with nitrogen, and the adipic acid was heated and melted at 170°C. Then, while the contents were agitated and while m-xylylenediamine (MXDA, available from Mitsubishi Gas Chemical Company, Inc.) was gradually added dropwise in a manner that the molar ratio relative to adipic acid became 0.994 (diamine / dicarboxylic acid), the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain MXD6 (relative viscosity 2.4).

### <Synthesis of MXD6 (relative viscosity 2.1)>

In a jacketed reactor equipped with an agitator, a partial condenser, a cooler, a thermometer, a dripping tank, and a nitrogen gas introduction tube, adipic acid was placed, inside of the reactor was sufficiently purged with nitrogen, and the adipic acid was heated and melted at 170°C. Then, while the contents were agitated and while m-xylylenediamine (MXDA, available from Mitsubishi Gas Chemical Company, Inc.) was gradually added dropwise in a manner that the molar ratio relative to adipic acid became 0.993 (diamine / dicarboxylic acid), the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain MXD6 (relative viscosity 2.1).

### <Synthesis of MXD10 (relative viscosity 2.1)>

In a jacketed reactor equipped with an agitator, a partial condenser, a cooler, a thermometer, a dripping tank, and a nitrogen gas introduction tube, sebacic acid (available from CASDA) was placed, inside of the reactor was sufficiently purged with nitrogen, and the sebacic acid was heated and melted at 170°C. Then, while the contents were agitated and while m-xylylenediamine (MXDA, available from Mitsubishi Gas Chemical Company, Inc.) was gradually added dropwise in a manner that the molar ratio of the m-xylylenediamine to the sebacic acid became 1:1, the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain MXD10 (relative viscosity 2.1).

### <Synthesis of MXD6 (relative viscosity 3.1)>

In a jacketed reactor equipped with an agitator, a partial condenser, a cooler, a thermometer, a dripping tank, and a nitrogen gas introduction tube, adipic acid was placed, inside of the reactor was sufficiently purged with nitrogen, and the adipic acid was heated and melted at 170°C. Then, while the contents were agitated and while m-xylylenediamine (MXDA, available from Mitsubishi Gas Chemical Company, Inc.) was gradually added dropwise in a manner that the molar ratio relative to adipic acid became 0.998 (diamine / dicarboxylic acid), the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain MXD6 (relative viscosity 3.1).

### Example 1

### <Production of bottle>

The polyamide resin composition was produced by dryblending 100 parts by mass of a polyamide resin having a relative viscosity shown in Table 1 with 100 ppm by mass of calcium stearate.

Using a two-color molding injection stretch blow-molding machine (available from NISSEI ASB MACHINE CO., LTD.) with two injection cylinders, a polyester resin (PET BK2180, available from Mitsubishi Chemical Corporation) was injected from one injection cylinder to form a polyester resin layer (outer layer), and a polyamide resin composition was injected from the other injection cylinder to thereby form a polyamide resin layer (inner layer), to thereby form a two-layer preform. The produced two-layer preform was heated again and was subjected to biaxial stretch blow-molding to produce a two-layer bottle. The molding conditions of the two-layer bottle were as follows.
Body section thickness of preform of the outer layer: 3.3 mm
Body section thickness of thickness of preform of the inner layer: 1.4 mm
Temperature of injection cylinder at the outer layer side: 275°C
Temperature of injection cylinder at the inner layer side: 260°C
Heating temperature before blow-molding: 280°C
Primary blow pressure: 1.0 MPa
Secondary blow pressure: 3.2 MPa
Regarding the produced bottle, the thickness of the body section was 0.39 mm (outer layer) and 0.14 mm (inner layer), the mass thereof was 28 g, and the internal volume thereof was 350 mL.

The produced bottles were used to perform the following evaluations.

### <Oxygen Barrier Property>

The produced bottles were each filled with 50 mL of water, and under conditions of an oxygen partial pressure of 0.21 atm, a bottle internal humidity of 100% RH (relative humidity), an external humidity of 50% RH (relative humidity), and a temperature of 23°C, nitrogen at 1 atm was circulated inside the bottle at 20 mL/min, and the amount of oxygen included in the nitrogen after circulating inside the bottle for 24 hours was detected using a coulometric sensor, and thereby the oxygen permeability was measured. The unit was cc/(pkg · day).

For the measurement of oxygen permeability, an oxygen permeability measuring device (product name "OX-TRAN 2/61", available from MOCON Inc.) was used.

### <Butyl acetate barrier properties>

The resulting bottle was filled with 350 mL of butyl acetate and was allowed to stand undisturbed under the temperature condition of 50°C and the humidity condition of 50% RH for 2 weeks. The amount of butyl acetate volatilized was calculated from the amount of change in mass before and after the test to evaluate the butyl acetate barrier properties. Butyl acetate barrier properties (unit: g / (bottle - day)) = (mass of bottle filled with butyl acetate before test - mass of bottle filled with butyl acetate after test)

### <External volume retention rate at the time of moisture absorption>

The resulting bottle was allowed to stand undisturbed at 50°C and 90% relative humidity for 30 days. The external volume of the bottle was measured before and after the test to calculate the retention rate. The external volume was determined from the amount of water increased when the bottle was immersed in a 300 mL of water in a 1 L graduated cylinder. Retention rate (unit: %) = [external volume of bottle after test / external volume of bottle before test] × 100

### <Drop Test>

The produced bottle was filled with 350 mL of water, the body section was held manually with both hands, and the bottle was released at a position of height 80 cm. The bottle was vertically dropped so that the bottom portion of the bottle came into contact with the ground, and the presence or absence of cracks was confirmed.

### Haze

The body section of the above-produced bottle was taken out, and the haze (unit: %) was measured using a color/turbidity simultaneous measuring device.

"COH400" manufactured by Nippon Denshoku Industries Co., Ltd. was used as the color/turbidity simultaneous measuring device.

### Examples 2 to 4 and Comparative Example 1

In Example 1, the same procedure was carried out except that the type of polyamide resin was changed as shown in Table 1 or Table 2.

The injection cylinder temperature of the polyamide resin (MXD10) used in Example 4 was 260°C.

### Comparative Examples 2 to 4

### <Production of bottle>

The polyamide resin composition was produced by dryblending 100 parts by mass of a polyamide resin having a relative viscosity shown in Table 2 with 100 ppm by mass of calcium stearate.

Using an injection stretch blow-molding machine (available from NISSEI ASB MACHINE CO., LTD.) with one cylinder, a resin shown in Table 2 (or a polyamide resin composition including calcium stearate) was injected from the injection cylinder, to produce a preform. The produced preform was heated again and was blow-molded to produce a monolayer bottle. The molding conditions of the monolayer bottle were as follows.
Body section thickness of preform: 4.7 mm
Temperature of injection cylinder: 275°C for PET
260°C for MXD6
260°C for MXD10
Heating temperature before blow-molding: 280°C
Primary blow pressure: 1.0 MPa
Secondary blow pressure: 3.2 MPa
Regarding the produced bottle, the thickness of the body section was 0.39 mm (outer layer) and 0.14 mm (inner layer), the mass thereof was 28 g, and the internal volume thereof was 350 mL.

The produced bottle was used to perform the evaluations in the same manner as in Example 1.

**[Table 1]**

| | | Example 1 | Example 2 | Example 3 | Example 4 |
|---|---|---|---|---|---|
| Outer layer resin | | PET | PET | PET | PET |
| Inner layer resin | | MXD6 | MXD6 | MXD 6 | MXD10 |
| Relative viscosity of inner layer resin | | 2.6 | 2.4 | 2.1 | 2.1 |
| Thickness ratio (outer layer / inner layer) | | 7/3 | 7/3 | 7/3 | 7/3 |
| Oxygen Barrier Property | cc/pkg · day | 5.7 × 10⁻³ | 5.7 × 10⁻³ | 5.7 × 10⁻³ | 9.3 × 10⁻³ |
| Butyl acetate barrier properties | g/bottle · day | 0.007 | 0.007 | 0.007 | 0.009 |
| External volume retention rate at the time of moisture absorption | % | 97.0 | 97.0 | 97.0 | 98.5 |
| Drop test | Presence or absence of cracking | None | None | None | None |
| Haze (bottle side surface) | 0 | 3.1 | 2.4 | 1.5 | |

**[Table 2]**

| | | Comparative Example 1 | Comparative Example 2 | Comparative Example 3 | Comparative Example 4 |
|---|---|---|---|---|---|
| Outer layer resin | | PET | PET single layer | MXD6 single layer | MXD10 single layer |
| Inner layer resin | | MXD6 | | | |
| Relative viscosity of inner layer resin | | 3.1 | | 2.4 | 2.1 |
| Thickness ratio (outer layer / inner layer) | | 7/3 | - | - | - |
| Oxygen Barrier Property | cc/pkg · day | 5.9 × 10⁻³ | 3.0 × 10⁻² | 8.8 × 10⁻⁴ | 4.1 × 10⁻³ |
| Butyl acetate barrier properties | g/bottle · day | 0.007 | 0.017 | 0.0018 | 0.0021 |
| External volume retention rate at the time of moisture absorption | % | 97.0 | 99.3 | 92.0 | 81.9 |
| Drop test | Presence or absence of cracking | None | None | Present | None |
| Haze (bottle side surface) | % | 5.1 | | | |

As is clear from the above results, the two-color molding article (bottle) of the present invention was excellent in transparency.

Furthermore, the multilayer container of the present invention was excellent in oxygen barrier properties, butyl acetate barrier properties, the retention rate of external volume at the time of moisture absorption, impact resistance (suppression of cracking after drop test), and transparency (low haze).

### Reference Signs List

1 Outer layer preform
2 Mold for forming an inner layer preform
3 Composition for forming an inner layer
4 Inner layer preform
5 Two-layer preform

## Claims

1. A multilayer container including a two-color molding article, the two-color molding article comprising:
an outer layer containing a polyester resin; and
an inner layer containing a polyamide resin, and being in contact with the outer layer;
wherein the polyamide resin has a relative viscosity of 1.8 to 2.8.

2. The multilayer container according to claim 1,
wherein the polyamide resin contains a xylylenediamine-based polyamide resin including a diamine-derived structural unit and a dicarboxylic acid-derived structural unit, 70 mol% or more of the diamine-derived structural unit is derived from xylylenediamine, and 70 mol% or more of the dicarboxylic acid-derived structural unit is derived from an α,ω-linear aliphatic dicarboxylic acid having from 4 to 20 carbon atoms.

3. The multilayer container according to claim 1 or 2, wherein a thickness ratio (outer layer : inner layer) between the outer layer and the inner layer is 6 : 4 to 9 : 1.

4. A method for producing a two-layer preform, the method comprising:
injecting a composition including a polyamide resin for forming an inner layer, between an outer layer preform including a polyester resin and a mold for forming an inner layer preform disposed inside the outer layer preform, to perform two-color molding of the outer layer preform and the inner layer preform,
wherein a relative viscosity of the polyamide resin is 1.8 to 2.8.

5. The method for producing a two-layer preform according to claim 4,
wherein the polyamide resin contains a xylylenediamine-based polyamide resin including a diamine-derived structural unit and a dicarboxylic acid-derived structural unit, 70 mol% or more of the diamine-derived structural unit is derived from xylylenediamine, and 70 mol% or more of the dicarboxylic acid-derived structural unit is derived from an α,ω-linear aliphatic dicarboxylic acid having from 4 to 20 carbon atoms.

6. A method for producing a multilayer container, the method comprising:
injecting a composition including a polyamide resin for forming an inner layer, between an outer layer preform including a polyester resin and a mold for forming an inner layer preform disposed inside the outer layer preform, to perform two-color molding of the outer layer preform and the inner layer preform and to produce a two-layer preform; and
blow-molding the two-layer preform,
wherein a relative viscosity of the polyamide resin is from 1.8 to 2.8.

7. The method for producing a multilayer container according to claim 6,
wherein the polyamide resin contains a xylylenediamine-based polyamide resin including a diamine-derived structural unit and a dicarboxylic acid-derived structural unit, 70 mol% or more of the diamine-derived structural unit is derived from xylylenediamine, and 70 mol% or more of the dicarboxylic acid-derived structural unit is derived from an α,ω-linear aliphatic dicarboxylic acid having from 4 to 20 carbon atoms.
